(19) Europäisches Patentamt
European Patent Office
Office européen des brevets

(11) **EP 1 753 800 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(51) Int Cl.:
*C08G 18/66* (2006.01)    *C09K 5/06* (2006.01)
*C08L 75/08* (2006.01)

(21) Anmeldenummer: **05739397.7**

(86) Internationale Anmeldenummer:
**PCT/EP2005/005332**

(22) Anmeldetag: **17.05.2005**

(87) Internationale Veröffentlichungsnummer:
**WO 2005/113631 (01.12.2005 Gazette 2005/48)**

(54) **SYNTAKTISCHE POLYURETHANE UND DEREN VERWENDUNG ZUR OFF-SHORE-DÄMMUNG**

SYNTACTIC POLYURETHANES AND THE USE THEREOF FOR OFF-SHORE SHORE DAMPING

POLYURETHANES SYNTACTIQUES ET LEUR UTILISATION POUR ISOLER DES INSTALLATIONS EN MER

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.05.2004 DE 102004025031**

(43) Veröffentlichungstag der Anmeldung:
**21.02.2007 Patentblatt 2007/08**

(73) Patentinhaber: **BASF Aktiengesellschaft**
**67056 Ludwigshafen (DE)**

(72) Erfinder:
• **HUNTEMANN, Peter**
**49448 Stemshorn (DE)**
• **SCHILLING, Udo**
**49356 Diepholz (DE)**
• **LANG-WITTKOWSKI, Gabriele**
**68167 Mannheim (DE)**
• **JAHNS, Ekkehard**
**69469 Weinheim (DE)**

(56) Entgegenhaltungen:
**EP-A- 1 277 801        WO-A-99/03922**
**US-A- 6 000 438**

**Beschreibung**

Die Erfindung betrifft syntaktische Polyurethane, erhältlich durch Umsetzung von einer Polyisocyanatkomponente (a) mit einer Polyolkomponente (b), in Gegenwart von Mikrohohlkugeln (c) und verkapselten Latentwärmespeichern (d). Ferner betrifft die Erfindung die Verwendung der syntaktischen Polyurethane zur Dämmung von Off-Shore-Rohren sowie gedämmte Off-Shore-Rohre als solches, sowie andere im Off-Shore-Bereich eingesetzter Teile und Geräte.

Der Begriff syntaktische Kunststoffe umfasst im allgemeinen Kunststoffe, die Hohlfüllstoffe enthalten. Syntaktische Kunststoffe finden üblicherweise Verwendung als thermische Isolierbeschichtungen, aufgrund ihrer vorteilhaften Druckfestigkeit und Temperaturbeständigkeit bevorzugt im Off-Shore Bereich. Ebenfalls sind Anwendungen als Brandschutzmaterial und als Schallisolationsmaterial bekannt.

WO 87/1070 beschreibt ein Wärmeisolationsmaterial, bestehend aus elastomerem Kunststoff, wie beispielsweise Kautschuk oder Styrolbutadien, als Matrix und Mikrohohlglaskugeln, wobei die Mikrohohlglaskugeln in einer Menge von 40 - 80 Vol.-% eingearbeitet werden.

WO 99/3922, WO 02/72701 und EP-A-896 976 beschreiben syntaktische Polyurethane, die aus Polyurethan und Mikrohohlglaskugeln bestehen und bevorzugt als Isolierbeschichtung für Rohre im Off-Shore Bereich eingesetzt werden. Die Herstellung erfolgt durch Zugabe der Mikrohohlkugeln zu einer der Polyurethansystemkomponenten und anschließender Vermischung der Systemkomponenten.

Ferner ist es bekannt, Latentwärmespeicher zur Off-Shore-Dämmung zu verwenden. US 6,000,438 beschreibt ein Rohr, dass mit mehreren Schichten gedämmt ist, wovon eine Schicht verkapselte Latentwärmespeicher enthält. Die in dieser Schrift vorgeschlagene bevorzugte Lösung ist mit nicht erwünschtem technischen Aufwand verbunden.

Um gute Dämmeigenschaften eines Schaumsystems zu erhalten, ist es vorteilhaft, möglichst viele Mikrohohlkugeln in das System einzuarbeiten. Problematisch ist, dass hohe Füllstoffanteile zu Systemkomponenten mit hohen Viskositäten führen, die häufig thixotrop und unter Umständen nicht pumpfähig und schlecht vermischbar sind. Verstärkt wird diese Problematik dadurch, dass im Anwendungsbereich der Polyurethane üblicherweise der gesamte Füllstoffanteil in die Polyolkomponente gegeben werden muss, da die Glashohlkugeln im allgemeinen nicht mit dem Isocyanat verträglich sind, weil durch den Wassergehalt und/oder den Alkalianteil an der Oberfläche von Glas eine Beeinträchtigung der Qualität des Isocyanats erfolgt.

Des weiteren ist es ein Problem bei Off-Shore Erdölförderung, dass es aus technischen Gründen öfters zu Stillstand beim zu fördernden Erdöl kommt. Das zu fördernde Erdöl kühlt sich ab und verstopft trotz Dämmung die Rohrleitungen.

Aufgabe der Erfindung war es, eine Rezeptur für die Herstellung von syntaktischen Polyurethanen bereit zu stellen, die einerseits eine hohe Beladung von Mikrohohlfüllstoffen ermöglicht und somit zu einer niedrigen Gesamtdichte führt, und andererseits die zur Off-Shore-Dämmung benötigten Eigenschaften, wie beispielsweise gute Dehnbarkeit und eine Erweichungstemperatur von mehr als 150 °C gewährleistet. Des weiteren sollte auch ein hohes Maß an Verarbeitungssicherheit erreicht werden.

Ferner war es Aufgabe der Erfindung, eine Rezeptur für die Herstellung von syntaktischen Polyurethanen bereit zu stellen, welche bestmöglichen Schutz gegen das verstopfen von Off-Shore-Erdölrohren bei kurzzeitigem Stillstand der Förderproduktion gewährleisten.

Die Erfindung konnte gelöst werden, indem ein syntaktisches Polyurethan durch Umsetzung von Polyisocyanaten mit einer speziellen Polyolrezeptur in Gegenwart von Mikrohohlkugeln und verkapselten Latentwärmespeichern, insbesondere solche Latentwärmespeicher mit einem speziell eingestellten Phasenübergang flüssig/fest, hergestellt wurde.

Gegenstand der Erfindung ist daher ein syntaktisches Polyurethan,
erhältlich durch Umsetzung von

a) einer Polyisocyanatkomponente mit
b) einer Polyolkomponente, wobei die Polyolkomponente (b) zwei oder mehr Bestandteile, ausgewählt aus

b1) Polyetherpolyole auf Basis eines difunktionellen Startermoleküls,
b2) Polyetherpolyole auf Basis eines trifunktionellen Startermoleküls und
b3) Kettenverlängerungsmittel,

enthält,
in Gegenwart von
c) Mikrohohlkugeln und
d) verkapselten Latentwärmespeichern.

Unter dem Begriff Mikrohohlkugel c) sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 $\mu$m, bevorzugt von 5 bis 200 $\mu$m auf. Üblicherweises weisen die organischen oder mineralischen Hohlkugeln eine Schüttdichte von 0,1 bis 0,4 g/cm$^3$ auf. Sie besitzen im allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite® Glass Bubbles verwendet werden.

Die Mikrohohlkugeln werden im allgemeinen in einer Menge von 1 bis 80 Gew.-%, bevorzugt von 2 bis 50, mehr bevorzugt von 5 bis 35 Gew.-% und besonders bevorzugt von 10 bis 30 Gew.-%, bezogen auf das Gesamtgewicht des resultierenden syntaktischen Polyurethans, zugegeben.

Für die Komponenten a) und b) gilt folgendes:

Die verwendeten Polyisocyanate a) umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die in der Polyolkomponente b) verwendeten Polyetherpolyole werden nach literaturbekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, das reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden.

Bevorzugt werden Mischungen aus 1,2-Propylenoxid und Ethylenoxid, wobei insbesondere das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. In einer weiteren besonders bevorzugten Ausführungsform wird als Alkylenoxid nur 1,2-Propylenoxid verwendet.

Als Startermolekül kommen bevorzugt Alkohole, Amine oder Alkanolamine in Betracht.

Es ist erfindungswesentlich, dass die Polyolkomponente (b) zwei oder mehr Bestandteile, ausgewählt aus der Gruppe

b1) Polyetherpolyole auf Basis eines difunktionellen Startermoleküls,
b2) Polyetherpolyole auf Basis eines trifunktionellen Startermoleküls und
b3) Kettenverlängerungsmittel,

enthält.

Somit sind als Polyolkomponenten (b) Gemische aus (b1) und (b2), (b1) und (b3), (b2) und (b3) und (b1), (b2) und (b3) möglich.

Als difunktionelle Startermoleküle zu Herstellung des Bestandteils (b1) kann beispielsweise Ethandiol, Propandiol-1,2 und -1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet.

Im allgemeinen wird die Alkoxylierung des Bestandteils (b1) derart ausgeführt, dass der Bestandteil (b1) ein zahlenmittleres Molekulargewicht von 400 g/mol bis 3500 g/mol, bevorzugt von 600 bis 2500 g/mol, besonders bevorzugt von 800 bis 1500 g/mol aufweist.

Als trifunktionelle Startermoleküle zu Herstellung des Bestandteils (b2) werden bevorzugt Glycerin, Trimethylolpropan oder Gemische davon verwendet.

Im allgemeinen wird die Alkoxylierung des Bestandteils (b2) derart ausgeführt, dass der Bestandteil (b2) ein zahlenmittleres Molekulargewicht von 400 g/mol bis 8000 g/mol, bevorzugt von 1000 bis 6000 g/mol aufweist.

In einer bevorzugten Ausführungsform umfasst der Polyolbestandteil (b2) die Bestandteile (b2-1) und (b2-2), wobei es sich jeweils um ein Polyetherpolyol auf Basis eines trifunktionellen Startermoleküls handelt, jedoch mit unterschiedlichen Molekulargewicht.

Der Bestandteil (b2-1) umfasst ein Polyetherpolyol auf Basis eines trifunktionellen Startermoleküls mit einem zahlenmittleren Molekulargewicht von 400 g/mol bis 3500 g/mol, bevorzugt von 1000 bis 3200 g/mol, besonders bevorzugt von 1500 bis 3000 g/mol, insbesondere von 1800 bis 2900 g/mol.

Der Bestandteil (b2-2) ist üblicherweise ein Polyetherpolyol auf Basis eines trifunktionellen Startermoleküls mit einem zahlenmittleren Molekulargewicht von mehr als 3500 g/mol bis 8000 g/mol sein, bevorzugt von 3700 bis 7000 g/mol, besonders bevorzugt von 4000 g/mol bis 6000 g/mol.

Die Polyolkomponente (b) kann ferner Kettenverlängerungsmittel als Bestandteil (b3) enthalten. Unter Kettenverlängerungsmittel versteht man im allgemeinen verzweigte oder unverzweigte Alkohole oder Amine, bevorzugt 2-wertige Alkohole, mit einem Molekulargewicht von weniger als 400 g/mol, bevorzugt weniger als 300 g/mol, insbesondere von 60 bis 250 g/mol. Beispiele hierfür sind Ethylenglykol, 1,4-Butandiol, 1,3-Propandiol, Diethylenglykol oder Dipropylenglykol. Bevorzugt verwendet wird Dipropylenglykol.

In einer weiteren Ausführungsform enthält die Polyolkomponente (b) als zusätzlichen Bestandteil b4) ein Polyetherpolyol auf Basis eines vier- oder höherfunktionellen Startermoleküls. Bevorzugt verwendet werden 4- bis 6-funktionelle Startermoleküle. Beispiele für geeignete Startermoleküle sind Pentaerythrit, Sorbitol und Saccharose.

In einer bevorzugten Ausführungsform werden die einzelnen Bestandteile der Polyolkomponente (b) (d.h. die Bestandteile (b1), (b2), (b3) und gegebenenfalls (b4)) so gewählt, dass die Polyolkomponente b) eine Viskosität von weniger als 1000 mPas bei 25°C, bevorzugt weniger als 500 mPas bei 25°C, besonders bevorzugt von 200 bis 400 mPas bei 25°C, gemessen nach DIN 53019, aufweist.

Im allgemeinen werden die einzelnen Bestandteile der Polyolkomponente b) in folgenden Mengen, jeweils bezogen auf das Gesamtgewicht der Komponente b), eingesetzt:

> b1) in einer Menge von 0 bis 80 Gew.-%, bevorzugt 20 bis 60 Gew.-%, besonders bevorzugt von 30 bis 50 Gew.-%,
> b2) in einer Menge von 0 bis 80 Gew.-%, bevorzugt von 20 bis 60 Gew.-%, besonders bevorzugt von 30 bis 50 Gew.-% und
> b3) in einer Menge von 0 bis 30 Gew.-%, bevorzugt von 5 bis 25 Gew.-%, mehr bevorzugt von 7 bis 20 Gew.-%, besonders bevorzugt von 9 bis 18 Gew.-%,

jedoch mit der Maßgabe, dass mindestens 2 Bestandteile, ausgewählt aus (b1) bis (b3), in der Polyolkomponente enthalten sind.

Sofern Bestandteil b2) in die Bestandteile b2-1) und b2-2) aufgeteilt ist, so werden diese im allgemeinen in folgenden Mengen, jeweils bezogen auf das Gesamtgewicht der Komponente b), eingesetzt:

> b1) in einer Menge von 5 bis 40 Gew.-%, bevorzugt von 10 bis 30 Gew.-%, besonders bevorzugt von 15 bis 25 Gew.-%,
> b2) in einer Menge von 5 bis 40 Gew.-%, bevorzugt von 10 bis 30 Gew.-%, besonders bevorzugt von 15 bis 25 Gew.-%.

Sofern Bestandteil b4) verwendet wird, beträgt im allgemeinen die eingesetzte Menge 0,1 bis 15 Gew.-%, bevorzugt 1 bis 10 Gew.-%, besonders bevorzugt 2 bis 7 Gew.-%.

Gegebenenfalls können der Polyolkomponente noch Zusatzstoffe zugesetzt werden. Hier seien beispielsweise genannt Katalysatoren (Verbindungen, welche die Reaktion der Isocyanatkomponente mit der Polyolkomponente beschleunigen), oberflächenaktive Substanzen, Farbstoffe, Pigmente, Hydrolyseschutzstabilisatoren, Oxidationsschutzmittel sowie UV-Schutzmittel.

Des weiteren kann die Polyolkomponente thixotropierende Additive, wie beispielsweise Laromin® C 260 (Dimethyl-methylen-Bis-Cyclohexylamin) enthalten. Im allgemeinen liegt die eingesetzte Menge dieser thixotropierenden Additive zwischen 0,1 und 3 Gewichtsteilen, bezogen auf 100 Gewichtsteile der Polyol-Komponente (b).

Ferner ist es möglich, der Polyolkomponente b) die aus dem Stand der Technik bekannten Treibmittel zuzusetzen. Es ist jedoch bevorzugt, dass die Isocyanatkomponente und die Polyolkomponente kein physikalisches und kein chemisches Treibmittel enthält. Ferner ist bevorzugt, dass diesen Komponenten kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängem reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Sofern wie oben beschrieben keine Treibmittel eingesetzt werden, erhält man als erfindungsgemäßes Produkt kompakte Polyurethane und keine Polyurethanschaumstoffe.

Bei den Latentwärmespeicher enthaltenden Kapseln (d) handelt es sich um Teilchen mit einem Kapselkern und einer Kapselwand. Nachfolgend werden diese Teilchen als Mikrokapseln bezeichnet.

Der Kapselkern enthält überwiegend, bevorzugt zu mehr als 95 Gew.-%, Latentwärmespeichermaterialien. Die Kapselwand enthält im allgemeinen polymere Materialien. Der Kapselkern ist dabei je nach der Temperatur fest oder flüssig.

Latentwärmespeichermaterialien sind in der Regel lipophile Substanzen, die ihren fest/flüssig Phasenübergang im Temperaturbereich von -20 bis 120°C haben. Im Rahmen dieser Erfindung werden jedoch Latentwärmespeichermaterialien verwendet, die ihren fest/flüssig Phasenübergang im Bereich oberhalb von etwa 20°C haben. Bevorzugt werden solche Latentwärmespeichermaterialien verwendet, die ihren fest/flüssig Phasenübergang im Temperaturbereich von 20 bis 150°C, bevorzugt von 25°C bis 120°C, besonders bevorzugt von 45°C bis 110°C, insbesondere von 60°C bis 100°C haben.

Als geeignete Substanzen sind beispielhaft zu nennen:

- aliphatische Kohlenwasserstoffverbindungen wie gesättigte oder ungesättigte $C_{10}$-$C_{50}$-Kohlenwasserstoffe, die verzweigt oder bevorzugt linear sind, z.B. wie n-Hexadecan, n-Octadecan, n-Eicosan, sowie cyclische Kohlenwasserstoffe, z.B. Cyclodecan;

- aromatische Kohlenwasserstoffverbindungen wie Benzol, Naphthalin, $C_1$-$C_{40}$-alkylsubstituierte aromatische Kohlenwasserstoffe wie Dodecylbenzol, Tetradecylbenzol, oder Decylnaphthalin;

- gesättigte oder ungesättigte $C_6$-$C_{30}$-Fettsäuren wie Laurin-, Stearin-, Öl- oder Behensäure, bevorzugt eutektische Gemische aus Decansäure mit z.B. Myristin-, Palmitin- oder Laurinsäure;

- Fettalkohole wie Lauryl-, Stearyl-, Oleyl-, Myristyl-, Cetylalkohol,

- $C_6$-$C_{30}$-Fettamine, wie Decylamin, Dodecylamin, Tetradecylamin oder Hexadecylamin;

- Ester wie $C_1$-$C_{10}$-Alkylester von Fettsäuren wie Propylpalmitat, Methylstearat oder Methylpalmitat sowie bevorzugt ihre eutektischen Gemische;

- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;

- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Beispielsweise können die obengenannten halogenierten Kohlenwasserstoffe als Flammschutzmittel beigemischt werden. Ferner können auch Flammschutzmittel wie Decabromdiphenyloxid, Octabromdiphenyloxid, Antimonoxid oder in der US-A 4 797 160 beschriebene Flammschutzadditive zugesetzt werden.

Weiterhin ist es vorteilhaft, den Kapselkern bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120°C höheren Schmelzpunkt als die eigentliche Kernsubstanz. Geeignete Verbindungen sind die oben als lipophile Substanzen erwähnten Fettsäuren, Fettalkohole, Fettamine sowie aliphatische Kohlenwasserstoffverbindungen, wie z.B. n-Alkane.

Die Kapselwand enthält üblicherweise organische Polymere. Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise Formaldehydharze, Polyharnstoffe und Polyurethane sowie hochvernetzte Methacrylsäureesterpolymere.

Unter Formaldehydharzen versteht man Reaktionsprodukte aus Formaldehyd mit

- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,

oder ihren Mischungen.

Bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die $C_1$-$C_4$-Alkyl- insbesondere Methylether dieser Formaldehydharze sowie die Mischungen mit diesen Formaldehydharzen. Insbesondere werden Melamin-Formaldehyd-Harze und/oder deren Methylether bevorzugt.

Kapselwände aus Polyharnstoffen und Polyurethanen sind ebenfalls möglich. Die Kapselwände entstehen durch Umsetzung von $NH_2$-Gruppen bzw. OH-Gruppen tragenden Reaktanden mit Di- und/oder Polyisocyanaten.

Bevorzugt werden Mikrokapseln, deren Kapselwand ein Methacrylsäureesterpolymer, welches bevorzugt vernetzt ist, enthält. Der Vernetzungsgrad kann beispielsweise mit einem Vernetzeranteil von 10 Gew.-%, bezogen auf das Gesamtpolymer, erzielt werden.

Die bevorzugten Mikrokapseln werden aus 30 bis 100 Gew.-%, vorzugsweise 30 bis 95 Gew.-% eines oder mehrerer $C_1$-$C_{24}$-Alkylester der Acryl- und/oder Methacrylsäure als Monomere I aufgebaut. Außerdem können die Mikrokapseln aus bis zu 80 Gew.-%, vorzugsweise aus 5 bis 60 Gew.%, insbesondere aus 10 bis 50 Gew.-%, eines oder mehrerer bi- oder polyfunktionellen Monomere als Monomere II, welche in Wasser nicht löslich oder schwer löslich sind und aus bis zu 40 Gew.-%, vorzugsweise bis zu 30 Gew.-% sonstiger Monomere III mit aufgebaut sein.

Als Monomere I eignen sich $C_1$-$C_{24}$-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens 2 nichtkonjugierte ethylenische Doppelbindungen haben.

Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, $\alpha$-Methylstyrol, $\beta$-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure.

Die im Rahmen dieser Erfindung verwendeten Mikrokapseln können durch eine sogenannte in-situ-Polymerisation hergestellt werden. Bei diesem Verfahren wird üblicherweise aus den Monomeren, einem Radikalstarter, gegebenenfalls einem Schutzkolloid und der einzukapselnden lipophilen Substanz eine stabile Öl-in-Wasser-Emulsion hergestellt, in der sie als disperse Phase vorliegen. Der Anteil der Ölphase in der Öl-in-Wasser-Emulsion liegt vorzugsweise bei 20 bis 60 Gew.-%.

Anschließend löst man die Polymerisation der Monomeren durch Erwärmung aus, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Die Dispersions- und Polymerisationstemperatur liegt bevorzugt oberhalb der Schmelztemperatur der lipophilen Substanzen. In der Regel werden die Mikrokapseln in Gegenwart wenigstens eines organischen Schutzkolloids hergestellt. Eine bevorzugte Verfahrensführung ist beispielsweise in EP 457 154 beschrieben.

Die Teilchengröße der Mikrokapseln kann durch das Herstellverfahren beeinflusst werden. Üblicherweise liegen nach dem Herstellverfahren die Mikrokapseln in Form einer Teilchenverteilung vor, sofern man keine weiteren Schritte, wie z.B. Sieben, vornimmt. Es ist bevorzugt, dass der mittlere Teilchendurchmesser der Verteilung ($D_m$) zwischen 1 und 90 $\mu$m, bevorzugt zwischen 2 und 50 $\mu$m, mehr bevorzugt zwischen 3 und 30 $\mu$m, besonders bevorzugt zwischen 4 und 20 $\mu$m liegt und mindestens 80 % der Teilchen, bezogen auf 100 % der in der Verteilung vorhandenen Teilchen (N), einen Durchmesser aufweisen, welcher einen Wert zwischen 0,2 $D_m$ und 3 $D_m$, bevorzugt zwischen 0,3 $D_m$ und 2,5 $D_m$, besonders bevorzugt zwischen 0,5 $D_m$ und 1,5 $D_m$ aufweist

Die Gesamtzahl der in der Verteilung vorhanden Teilchen (N) ergibt sich aus dem Integral von $D_{min}$ bis $D_{max}$:

$$\int_{D_{min}}^{D_{max}} n(D) \cdot dD = N$$

Als mittlerer Teilchendurchmesser $D_m$ (der auch als Mittelwert der Teilchengröße bezeichnet wird) bezeichnet man den mit der Verteilungsfunktion gewichteten arithmetischen Mittelwert der Teilchengröße. Man multipliziert zuerst jeden Durchmesser D zwischen $D_{min}$ (Teilchen mit kleinsten in der Verteilung auftretender Durchmesser) und $D_{max}$ (Teilchen mit größten in der Verteilung auftretender Durchmesser) mit der Anzahl n(d) der Teilchen, die diesen Durchmesser haben und bildet die Summe. Dies wird beschrieben durch

$$\int_{D_{min}}^{D_{max}} D \cdot n(D) \cdot dD$$

Um den Mittelwert zu bilden, muss dann diese Summe durch die Gesamtzahl der Teilchen (N) geteilt werden, also

$$Dm = \frac{\int_{D_{min}}^{D_{max}} D \cdot n(D) \cdot dD}{N} = \frac{\int_{D_{min}}^{D_{max}} D \cdot n(D) \cdot dD}{\int_{D_{min}}^{D_{max}} n(D) \cdot dD}$$

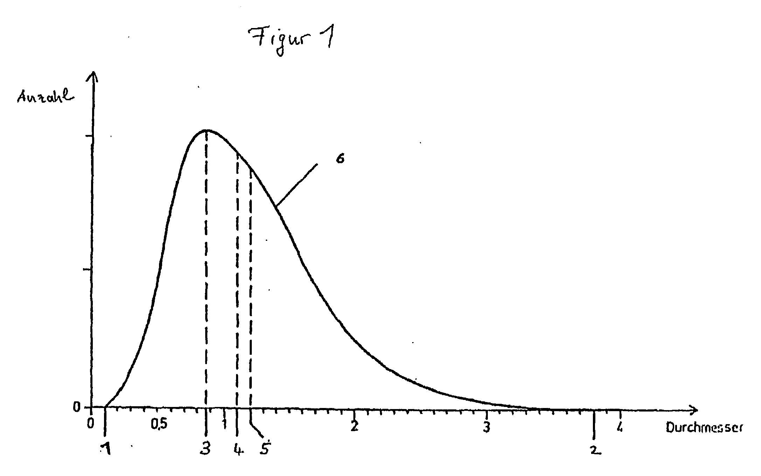

Häufig wird $D_m$ auch als "Schwerpunkt" der Partikelgrößenverteilung bezeichnet. Zur Veranschaulichung von $D_m$, $D_{min}$, $D_{max}$ wird auf Figur 1 verwiesen. In Figur 1 bedeutet:

| | |
|---|---|
| 1 | $D_{min}$ |
| 2 | $D_{max}$ |
| 3 | $D_h$ (= häufigste, in der Verteilung vorkommende Teilchengröße) |
| 4 | $D_z$ (= Halbwertsdurchmesser, teilt die Fläche in zwei gleich große Teile) |
| 5 | $D_m$ |
| 6 | n(D) |

Die Bestimmung der Teilchengrößen in der Verteilung erfolgte nach der dynamische Lichtstreuung gemäß ISO13323-1, Ausgabe:2000-11 (Determination of particle size distribution - Single-particle light interaction methods - Part 1: Light interaction considerations) und ISO/DIS 13323-2, Ausgabe:2000-09 (Bestimmung der Partikelgrößenverteilung - Partikelmessung durch Lichtstreuung an Einzelpartikeln - Teil 2: Geräte und Durchführung für die Lichtstreuung an Einzelpartikeln).

Im allgemeinen werden die verkapselten Latentwärmespeicher (d) in einer Menge von 1 bis 60 Gew.-%, bevorzugt 3 bis 40 Gew.-%, mehr bevorzugt 5 bis 20 Gew.-%, besonders bevorzugt von 7 bis 15 Gew.-%), bezogen auf das Gesamtgewicht des resultierenden syntaktischen Polyurethans, eingearbeitet.

Neben den erfindungsgemäßen syntaktischen Polyurethanen ist ferner Gegenstand der Erfindung ein Verfahren zur Herstellung von syntaktischen Polyurethanen durch Umsetzung von

a) einer Polyisocyanatkomponente mit
b) einer Polyolkomponente, wobei die Polyolkomponente (b) zwei oder mehr Bestandteile, ausgewählt aus

b1) Polyetherpolyole auf Basis eines difunktionellen Startermoleküls,
b2) Polyetherpolyole auf Basis eines trifunktionellen Startermoleküls und
b3) Kettenverlängerungsmittel,

enthält,
in Gegenwart von
c) Mikrohohlkugeln und

d) verkapselten Latentwärmespeicher.

Für die verwendeten Komponenten (a) bis (d) wird hier auf vorstehende Ausführungen verwiesen. Ebenso gilt dies für die vorstehend beschriebenen Zusatzstoffe.

Zur Herstellung der Polyurethane werden die Polyisocyanate a) Polyolkomponente b) in solchen Mengen zur Umsetzung gebracht, dass das Äquivalenzverhältnis von NCO-Gruppen der Polyisocyanate a) zur Summe der reaktiven Wasserstoffatome der Komponente b) 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0°C bis 100°C, bevorzugt 15 bis 60°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Einarbeitung der Mikrohohlkugeln (c) in die PUR-Komponenten erfolgt nach aus dem Stand der Technik bekannten Methoden. Es ist möglich, die Mikrohohlkugeln vor der Umsetzung mindestens einer der Komponenten (a) oder (b) zuzugeben und/oder die Mikrohohlkugeln unmittelbar nach Umsetzung der Komponenten a) und b) dem noch reagierenden Umsetzungsgemisch zuzugeben. Beispiele für geeignete Vermischungsverfahren sind in WO 94/20286, WO 02/102887 und WO 02/072701 beschrieben.

Die Einarbeitung der Mikrohohlkugeln (c) und der verkapselten Latentwärmespeicher (d) in die PUR-Komponenten erfolgt nach aus dem Stand der Technik bekannten Methoden. Es ist möglich, die Mikrohohlkugeln (c) und die verkapselten Latenwärmespeicher (d) vor der Umsetzung mindestens einer der Komponenten (a) oder (b) zuzugeben und/oder die Mikrohohlkugeln (c) und die verkapselten Latenwärmespeicher (d) unmittelbar nach Umsetzung der Komponenten (a) und (b) dem noch reagierenden Umsetzungsgemisch zuzugeben. Beispiele für geeignete Vermischungsverfahren sind in WO 94/20286, WO 02/102887 und WO 02/072701 beschrieben.

Weiterhin ist Gegenstand der Erfindung die Verwendung der erfindungsgemäßen syntaktischen Polyurethane zur Dämmung von Off-Shore-Rohren oder zur Herstellung von Muffen für Off-Shore-Rohre, sowie zur Herstellung oder Beschichtung anderer Teile und Geräte im Bereich Off-Shore. Beispiele für andere Teile und Geräte im Bereich Off-Shore sind Bohrlochanschlüssen, Rohrsammler, Pumpen und Bojen.

Unter Off-Shore Rohr wird im Rahmen dieser Erfindung ein Rohr verstanden, welches zur Förderung von Öl und Gas dient. Das Öl/ Gas strömt im allgemeinen hierin vom Meeresboden auf Plattformen, in Schiffe/ Tanker oder auch direkt an Land.

Unter Muffen sind die Verbindungen von zwei Rohren oder Rohrteilen zu verstehen.

Gegenstand der Erfindung ist somit ein Off-Shore-Rohr, aufgebaut aus

(i) einem innerem Rohr daran haftend angebracht

(ii) eine Schicht aus erfindungsgemäßen syntaktischen Polyurethanen.

In einer bevorzugten Ausführungsform weist die Schicht aus erfindungsgemäßen syntaktischen Polyurethan eine Dicke von 5 bis 200 mm, bevorzugt 10 bis 170 mm, besonders bevorzugt 15 bis 150 mm auf.

Es ist weiterhin möglich, dass auf der Schicht aus erfindungsgemäßem Polyurethan eine weitere Schicht, z.B. eine Deckschicht aus einem Thermoplasten, angebracht ist. Bevorzugt ist jedoch, dass bei den erfindungsgemäßen Off-Shore-Rohre auf der Schicht (ii) aus syntaktischem Polyurethan keine weitere Schicht mehr angebracht ist.

Schließlich ist Gegenstand der Erfindung ein Verfahren zur Herstellung von erfindungsgemäßen Off-Shore-Rohren, umfassend die Schritte

1) Bereitstellen eines inneren Rohres, das mit syntaktischen Polyurethan beschichtet werden soll,
2) Rotieren des zu beschichteten Rohres in axialer Richtung,
3) Aufbringen eines nicht ausreagierten Reaktionsgemisches zur Herstellung der Schicht aus syntaktischen Polyurethan, enthaltend die Komponenten a), b) und c), auf das rotierende Rohr.

Schritt 3 kann in zwei unterschiedlichen, bevorzugten Ausführungsformen erfolgen.

In einer ersten Ausführungsform erfolgt in Schritt 3) das Aufbringen des Reaktionsgemisches durch Aufgießen auf das sich drehende Rohr. Diese Ausführungsform wird als Rotationsgießverfahren bezeichnet. Bei dem Reaktionsgemisch handelt es sich um das erfindungsgemäße Polyurethangemisch, das durch Vermischen der Komponenten a), b), c) und d) mittels herkömmlicher Mischvorrichtungen, z.B. Niederdruckmischkopf, erhalten wurde. Der Vorschub des Mischkopfs oder des Rohres wird im allgemeinen so eingestellt, dass bei konstantem Ausstoß die gewünschte Dicke der syntaktischen Polyurethanschicht erreicht wird.. Hierzu werden der Polyolkomponente bevorzugt tixotropierende Additive zugegeben, durch die ein Herabtropfen des Reaktionsgemisches vom rotierenden Rohr verhindert wird. Eine geeignete Rezeptur zur Durchführung des Rotationsgießverfahrens wird in nachfolgenden Beispielen unter Rezeptur 1

**EP 1 753 800 B1**

offenbart.

In einer zweiten Ausführungsform kann Schritt 3 auch durch sogenanntes Formgießen erfolgen: Hier wird das Reaktionsgemisch in eine geschlossene - unter Umständen auch beheizte - Form gegeben, in der das innere Rohr (i) (häufig auch als Mediumrohr bezeichnet) eingebettet ist. Der Raum zwischen dem Mediumrohr und der Formwand wird komplett mit dem Reaktionsgemisch ausgefüllt. Nach dem Aushärten des Polyurethansystems wird die Form entfernt, und das fertig beschichtete Rohr ist liegt vor. Wichtig ist hierbei, das die Form vollständig ohne Lufteinschläge befüllt wird.

Der Befüllvorgang kann unterspiegelig und auch von oben erfolgen. Hierbei wird aus verfahrenstechnischen Gründen bevorzugt auf ein tixotropierendes Additiv verzichtet, da das Reaktionsgemisch fließfähig bleiben muss, um tatsächlich die Form vollständig füllen zu können. Eine geeignete Rezeptur zur Durchführung des Formgießverfahrens wird in nachfolgenden Beispielen unter Rezeptur 2 offenbart.

Die Erfindung soll durch nachstehende Beispiele veranschaulicht werden.

Beispiele

Es wurden syntaktische Polyurethane nach den Rezepturen 1 und 2 bzw. mit erfindungsgemäßen Polyurethane beschichtete Rohre hergestellt.

Rezeptur 1:

| | |
|---|---|
| Polyetherpolyol, 2-fkt. Starter | 41,0 Gewichtsteile (GT) |
| Polyetherpolyol 3-fkt. Starter, Mw 2000 | 20,0 GT |
| Polyetherpolyol 3-fkt. Starter, Mw 5000 | 20,0 GT |
| Kettenverlängerungsmittel | 14,6 GT |
| Laromin C 260 | 2,2 GT |
| Katalyse (Lupragen NMI) | 0,3 GT |
| Haftvermittler (Silan) | 0,6 GT |
| Entschäumer | 0,5 GT |
| UOP L-Paste | 0,8 GT |

B-Komponente: Lupranat M 20 S

C- Komponente: 3M Glassbubbles Typ S 38 (16% Gesamtanteil)

D-Komponente: Latentwärmespeicher: Ceracap NB 1001 X (Ein Mikrokapselpulver mit einem Kern aus einer n-Alkan-Wachsmischung mit einem Schmelzpunkt von 26°C sowie einer Kapselwand aus vernetztem Polymerthymethacrylat).

In Anteilen von 5,0 Gew.-%; 10 Gew.-% und 20 Gew.-%, bezogen auf das Gesamtgewicht des syntaktischen Polyurethans

Die Einarbeitung der Komponenten C und D erfolgt in die A-Komponente.

Die Herstellung des GSPU wird mittels einer Niederdruckmaschine durchgeführt.

Es wurden mit Rezeptur 1 Off-Shore-Rohre nach dem Rotationsgießverfahren hergestellt.

Rezeptur 2

| | |
|---|---|
| Polyetherpolyol, 2-fkt. Starter | 40,61 GT |
| Polyetherpolyol 3-fkt. Starter, Mw 2000 | 41,63 GT |
| Kettenverlängerungsmittel | 16,16 GT |
| Katalyse | 0,50 GT |
| Haftvermittler (Silan) | 0,60 GT |
| Entschäumer | 0,50 GT |

B-Komponente: Lupranat M 20 S

C- Komponente: 3M Glassbubbles Typ S 38 (16% Gesamtanteil))

D-Komponente: Latentwärmespeicher: Ceracap NB 1001 X (Ein Mikrokapselpulver mit einem Kern aus einer n-Alkan-Wachsmischung mit einem Schmelzpunkt von 26°C sowie einer Kapselwand aus vernetztem Polymerthymethacrylat).

In Anteilen von 5,0 Gew.-%; 10 Gew.-% und 20 Gew.-%, bezogen auf das Gesamtgewicht des syntaktischen Polyurethans.

Die Einarbeitung der Komponenten C und D erfolgt in die A-Komponente.
Die Herstellung des GSPU wird mittels einer Niederdruckmaschine durchgeführt.

Es wurden mit Rezeptur 2 Off-Shore-Rohre nach dem Formgießverfahren hergestellt.

**Patentansprüche**

1. Syntaktisches Polyurethan,
erhältlich durch Umsetzung von

   a) einer Polyisocyanatkomponente mit
   b) einer Polyolkomponente, wobei die Polyolkomponente (b) zwei oder mehr Bestandteile, ausgewählt aus

      b1) Polyetherpolyole auf Basis eines difunktionellen Startermoleküls,
      b2) Polyetherpolyole auf Basis eines trifunktionellen Startermoleküls und b3) Kettenverlängerungsmittel,

   enthält,
   in Gegenwart von
   c) Mikrohohlkugeln und
   d) verkapselten Latentwärmespeichern.

2. Syntaktisches Polyurethan nach Anspruch 1, **dadurch gekennzeichnet, dass** die einzelnen Bestandteile der Polyolkomponente b) so gewählt werden, dass die Polyolkomponente b) eine Viskosität von weniger als 1000 mPas bei 25°C, gemessen nach DIN 53019, aufweist.

3. Syntaktisches Polyurethan nach Anspruch 1 oder 2, **dadurch gekennzeichnet, dass** in der Komponente (b) die Bestandteile

      b1) in einer Menge von 20 bis 60 Gew.-%,
      b2) in einer Menge von 20 bis 60 Gew.-% und
      b3) in einer Menge von 5 bis 25 Gew.-%,

   bezogen auf das Gesamtgewicht der Polyolkomponente b), vorhanden sind.

4. Syntaktisches Polyurethan nach einem der Ansprüche 1 bis 3, **dadurch gekennzeichnet, dass** der Phasenübergang flüssig/fest der verkapselten Latentwärmespeicher (d) im Bereich von 30°C bis 100°C liegt.

5. Syntaktisches Polyurethan nach einem der Ansprüche 1 bis 4, **dadurch gekennzeichnet, dass** die verkapselte Latentwärmespeicher (c), in Form einer Teilchengrößenverteilung vorliegen, wobei der mittlere Teilchendurchmesser der Verteilung ($D_m$) zwischen 1 und 90 $\mu$m liegt und mindestens 80 % der Teilchen, bezogen auf 100 % der in der Verteilung vorhandenen Teilchen (N), einen Durchmesser aufweisen, welcher einen Wert zwischen 0,2 $D_m$ und 3 $D_m$ aufweist.

6. Verfahren zur Herstellung von syntaktischen Polyurethanen
durch Umsetzung von

   a) einer Polyisocyanatkomponente mit
   b) einer Polyolkomponente, wobei die Polyolkomponente (b) zwei oder mehr Bestandteile, ausgewählt aus

      b1) Polyetherpolyole auf Basis eines difunktionellen Startermoleküls,
      b2) Polyetherpolyole auf Basis eines trifunktionellen Startermoleküls und
      b3) Kettenverlängerungsmittel,

   enthält,
   in Gegenwart von

c) Mikrohohlkugeln und

d) verkapselten Latentwärmespeichern.

**7.** Verwendung von syntaktischen Polyurethanen nach einem der Ansprüche 1 bis 5 zur Dämmung von Off-Shore-Rohren und/oder zur Herstellung von Muffen für Off-Shore-Rohre, sowie zur Herstellung oder Beschichtung von Teilen und Geräten im Bereich Off-Shore.

**8.** Off-Shore-Rohr, aufgebaut aus

(i) einem innerem Rohr, daran haftend angebracht

(ii) eine Schicht aus syntaktischen Polyurethanen gemäß einem der Ansprüche 1 bis 5.

**9.** Off-Shore-Rohr nach Anspruch 8, **dadurch gekennzeichnet, dass** die Schicht (ii) aus syntaktischen Polyurethan eine Dicke von 5 bis 200 mm aufweist.

**10.** Verfahren zur Herstellung von Off-Shore-Rohren nach Anspruch 8 oder 9, umfassend die Schritte

1) Bereitstellen eines inneren Rohres, das mit syntaktischen Polyurethan beschichtet werden soll,

2) Rotieren des zu beschichteten Rohres

3) Aufbringen eines nicht ausreagierten Reaktionsgemisches zur Herstellung der Schicht aus syntaktischen Polyurethan, enthaltend die Komponenten a), b) und c), auf das rotierende Rohr.

## Claims

**1.** A syntactic polyurethane,
obtainable by reacting

a) a polyisocyanate component with

b) a polyol component, the polyol component (b) comprising two or more constituents selected from

b1) polyetherpolyols based on a difunctional initiator molecule,

b2) polyetherpolyols based on a trifunctional initiator molecule and

b3) chain extenders,

in the presence of

c) hollow microspheres and

d) encapsulated latent heat stores.

**2.** The syntactic polyurethane according to claim 1, wherein the individual constituents of the polyol component b) are chosen so that the polyol component b) has a viscosity of less than 1000 mPa.s at 25°C, measured according to DIN 53019.

**3.** The syntactic polyurethane according to claim 1 or 2, wherein the constituents

b1) are present in an amount of from 20 to 60% by weight,

b2) are present in an amount of from 20 to 60% by weight and

b3) are present in an amount of from 5 to 25% by weight,

based on the total weight of the polyol component b), in the component (b).

**4.** The syntactic polyurethane according to any of claims 1 to 3, wherein the liquid/solid phase transition of the encapsulated latent heat stores (d) is in the range from 30°C to 100°C.

**5.** The syntactic polyurethane according to any of claims 1 to 4, wherein the encapsulated latent heat stores (c) are present in the form of a particle size distribution, the mean particle diameter of the distribution ($D_m$) being from 1 to 90 $\mu$m and at least 80% of the particles, based on 100% of the particles (N) present in the distribution, having a diameter which has a value of from 0.2 $D_m$ to 3 $D_m$.

**6.** A process for the preparation of syntactic polyurethanes by reacting

a) a polyisocyanate component with

b) a polyol component, the polyol component (b) comprising two or more constituents selected from

b1) polyetherpolyols based on a difunctional initiator molecule,

b2) polyetherpolyols based on a trifunctional initiator molecule and

b3) chain extenders,

in the presence of

c) hollow microspheres and

d) encapsulated latent heat stores.

**7.** The use of syntactic polyurethanes according to any of claims 1 to 5 for insulating offshore pipes and/or for the production of sockets for offshore pipes, and for the production or coating of parts and apparatuses in the offshore sector.

**8.** An offshore pipe composed of

(i) an inner pipe and, adhesively mounted thereon,

(ii) a layer of syntactic polyurethanes according to any of claims 1 to 5.

**9.** The offshore pipe according to claim 8, wherein the layer (ii) of syntactic polyurethane has a thickness of from 5 to 200 mm.

**10.** A process for the production of offshore pipes according to claim 8 or 9, comprising the steps

1) provision of an inner pipe which is to be coated with syntactic polyurethane,

2) rotation of the pipe to be coated and

3) application of an unreacted reaction mixture for the production of the layer of syntactic polyurethane, comprising the components a), b) and c), to the rotating pipe.

**Revendications**

**1.** Polyuréthanne syntactique

obtenu par mise en réaction :

a) d'un composant polyisocyanate avec :

b) un composant polyol, le composant polyol (b) contenant deux composants ou plus sélectionnés à partir de :

b1) polyéthérpolyols à base d'une molécule d'amorce difonctionnelle,

b2) polyéthérpolyols à base d'une molécule d'amorce trifonctionnelle et

b3) d'agents d'allongement de chaîne,

en présence de :

c) microbilles creuses et

d) d'accumulateurs de chaleur latente encapsulés.

**2.** Polyuréthanne syntactique selon la revendication 1, **caractérisé en ce que** les différents constituants du composant polyol b) sont sélectionnés de telle sorte que le composant polyol b) présente une viscosité de moins de 1000 mPas à 25°C, mesurée selon DIN 53019.

**3.** Polyuréthanne syntactique selon l'une des revendications 1 ou 2, **caractérisé en ce que** le composant b) contient les éléments constituants :

b1) dans une quantité de 20 à 60% en poids,

b2) dans une quantité de 20 à 60% en poids, et

b3) dans une quantité de 5 à 25% en poids,

par rapport au poids total du composant polyol b).

4. Polyuréthanne syntactique selon l'une des revendications 1 à 3, **caractérisé en ce que** la transition de phase liquide/solide des accumulateurs de chaleur latente encapsulés (d) se situe dans une gamme de 30 à 100°C.

5. Polyuréthanne syntactique selon l'une des revendications 1 à 4, **caractérisé en ce que** les accumulateurs de chaleur latente encapsulés (c) sont présents sous la forme d'une distribution des tailles de particules, la taille moyenne des particules de la distribution ($d_m$) se situant entre 1 et 90 $\mu$m et au moins 80% des particules par rapport à 100% des particules présentes dans la distribution (N) ayant un diamètre qui présente une valeur située entre 0,2 $D_m$ et 3 $D_m$.

6. Procédé de préparation de polyuréthannes syntactiques par mise en réaction :

   a) d'un composant polyisocyanate avec
   b) un composant polyol, le composant polyol (b) contenant deux constituants ou plus sélectionnés à partir de :

      b1) polyétherpolyols à base d'une molécule d'amorce difonctionnelle,
      b2) polyétherpolyols à base d'une molécule d'amorce trifonctionnelle et
      b3) agents d'allongement de chaîne,

   en présence de :
   c) microbilles creuses et
   d) d'accumulateurs de chaleur latente encapsulés.

7. Utilisation de polyuréthannes syntactiques selon l'une des revendications 1 à 5 en vue de l'amortissement de tubes off-shore et/ou de la préparation de manchons pour tubes off-shore ainsi que pour la préparation ou le revêtement de pièces et appareils dans le secteur off-shore.

8. Tube off-shore composé :

   i) d'un tube interne adhérant à celui-ci;
   ii) d'une couche de polyuréthannes syntactiques selon l'une des revendications 1 à 5.

9. Tube off-shore selon la revendication 8, **caractérisé en ce que** la couche (ii) en polyuréthanne syntactique présente une épaisseur de 5 à 200 mm.

10. Procédé de préparation de tubes off-shore selon l'une des revendications 8 ou 9, comprenant les étapes suivantes :

    1) fourniture d'un tube intérieur qui doit être revêtu de polyuréthanne syntactique;
    2) rotation du tube revêtu;
    3) application d'un mélange réactionnel qui n'a pas réagi complètement en vue de la préparation de la couche à partir de polyuréthanne syntactique, contenant les composants a), b) et c) sur le tube en rotation.

Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 871070 A
- WO 993922 A
- WO 0272701 A
- EP 896976 A
- US 6000438 A
- US 4797160 A
- US 5456852 A
- EP 457154 A
- WO 9420286 A
- WO 02102887 A
- WO 02072701 A